(19) Europäisches Patentamt
European Patent Office
Office européen des brevets

(11) **EP 3 809 311 A1**

(12) **EUROPÄISCHE PATENTANMELDUNG**

(43) Veröffentlichungstag:
**21.04.2021 Patentblatt 2021/16**

(51) Int Cl.:
***G06K 9/00*** *(2006.01)*     ***G06K 9/62*** *(2006.01)*

(21) Anmeldenummer: **19203374.4**

(22) Anmeldetag: **15.10.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Elektrobit Automotive GmbH**
**91058 Erlangen (DE)**

(72) Erfinder: **Hermann, Stefan**
**65824 Schwalbach a. Ts. (DE)**

(74) Vertreter: **Continental Corporation**
**c/o Continental Teves AG & Co. OHG**
**Intellectual Property**
**Guerickestraße 7**
**60488 Frankfurt a. Main (DE)**

(54) **VERARBEITUNG VON SENSORDATEN IN EINEM KRAFTFAHRZEUG**

(57) Die vorliegende Erfindung betrifft ein Verfahren, ein Computerprogramm mit Instruktionen und eine Vorrichtung zum Verarbeiten von Sensordaten in einem Kraftfahrzeug. Die Erfindung betrifft des Weiteren ein Assistenzsystem für ein Kraftfahrzeug, in dem ein erfindungsgemäßes Verfahren realisiert ist, sowie ein Kraftfahrzeug mit einem solchen Assistenzsystem. In einem ersten Schritt werden Sensordaten bezüglich eines Objekts empfangen (10), die von Sensoren zumindest zweier Sensortypen stammen. Weiterhin wird ein Objektmodell ausgewählt (11), auf das Sensormodelle der jeweiligen Sensortypen angewandt werden (12). Anschließend werden die Sensordaten eines Sensors eines ersten Sensortyps mit dem Objektmodell verglichen (13). Ebenso werden die Sensordaten eines Sensors eines zweiten Sensortyps mit dem Objektmodell verglichen (14). Auf Basis der Vergleiche (13, 14) wird ein aktualisiertes Objektmodell bestimmt (15). Dieses wird schließlich ausgegeben (16), wenn eine Korrelation zwischen den Sensordaten und dem aktualisierten Objektmodell hinreichend ist.

FIG. 1

**Beschreibung**

Die vorliegende Erfindung betrifft ein Verfahren, ein Computerprogramm mit Instruktionen und eine Vorrichtung zum Verarbeiten von Sensordaten in einem Kraftfahrzeug. Die Erfindung betrifft des Weiteren ein Assistenzsystem für ein Kraftfahrzeug, in dem ein erfindungsgemäßes Verfahren realisiert ist, sowie ein Kraftfahrzeug mit einem solchen Assistenzsystem.

Hochautonome Fahrsysteme nutzen verschiedene Sensortypen zur Objekterkennung. Da die Ausgangsdaten dieser Sensortypen unterschiedlich sind, werden für die verschiedenen Sensortypen unterschiedliche Algorithmen für die Dekodierung verwendet. Beispielsweise sind Daten, die von einer Videokamera stammen, 2D-Bilder eines Objekts, während Radardaten für das Objekt 3D-Arrays sind. Kameradaten werden typischerweise mit nichtlinearen AI-Algorithmen dekodiert. Radardaten können mit linearen digitalen Filtern dekodiert werden.

Für hochgradig autonome Fahrfunktionen müssen die Position und die Größe eines erfassten Objekts anhand der Daten beider Sensortypen ausgewertet werden. Dazu können die Ausgaben des AI-Objektdecoders und des Radars mit einem linearisierten Kalman-Filter fusioniert und gefiltert werden. Allerdings ist die Fehlerrate von AI-Decodern derzeit noch zu hoch, sodass die Fehlerrate bei der Erkennung von Objekten auf Grundlage der fusionierten Daten nicht die geforderte Fehlerrate für hochautonome Fahrsysteme erfüllt. Aus Sicherheitsgründen sind daher lineare Ansätze wünschenswert. Zudem sollte die Qualität der Auswertung bewertbar sein.

Es ist eine Aufgabe der vorliegenden Erfindung, eine verbesserte Lösung für eine Verarbeitung von Sensordaten in einem Kraftfahrzeug bereitzustellen.

Diese Aufgabe wird durch ein Verfahren zum Verarbeiten von Sensordaten mit den Merkmalen des Anspruchs 1, durch ein Computerprogramm mit Instruktionen mit den Merkmalen des Anspruchs 9, durch eine Vorrichtung zum Verarbeiten von Sensordaten mit den Merkmalen des Anspruchs 10 sowie durch ein Assistenzsystem für ein Kraftfahrzeug mit den Merkmalen des Anspruchs 11 gelöst. Bevorzugte Ausgestaltungen der Erfindung sind Gegenstand der abhängigen Ansprüche.

Gemäß einem ersten Aspekt der Erfindung umfasst ein Verfahren zum Verarbeiten von Sensordaten in einem Kraftfahrzeug die Schritte:

- Empfangen von Sensordaten bezüglich eines Objekts von Sensoren zumindest zweier Sensortypen;
- Vergleichen der Sensordaten eines Sensors eines ersten Sensortyps mit einem Objektmodell;
- Vergleichen der Sensordaten eines Sensors eines zweiten Sensortyps mit dem Objektmodell;
- Bestimmen eines aktualisierten Objektmodells auf Basis der Vergleiche; und
- Ausgeben des aktualisierten Objektmodells, wenn eine Korrelation zwischen den Sensordaten und dem aktualisierten Objektmodell hinreichend ist.

Gemäß einem weiteren Aspekt der Erfindung umfasst ein Computerprogramm Instruktionen, die bei Ausführung durch einen Computer den Computer zur Ausführung der folgenden Schritte zum Verarbeiten von Sensordaten in einem Kraftfahrzeug veranlassen:

- Empfangen von Sensordaten bezüglich eines Objekts von Sensoren zumindest zweier Sensortypen;
- Vergleichen der Sensordaten eines Sensors eines ersten Sensortyps mit einem Objektmodell;
- Vergleichen der Sensordaten eines Sensors eines zweiten Sensortyps mit dem Objektmodell;
- Bestimmen eines aktualisierten Objektmodells auf Basis der Vergleiche; und
- Ausgeben des aktualisierten Objektmodells, wenn eine Korrelation zwischen den Sensordaten und dem aktualisierten Objektmodell hinreichend ist.

Der Begriff Computer ist dabei breit zu verstehen. Insbesondere umfasst er auch Steuergeräte, Mikrocontroller und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Verarbeiten von Sensordaten in einem Kraftfahrzeug auf:

- einen Eingang zum Empfangen von Sensordaten bezüglich eines Objekts von Sensoren zumindest zweier Sensortypen;
- ein erstes Vergleichsmodul zum Vergleichen der Sensordaten eines Sensors eines ersten Sensortyps mit einem Objektmodell;
- ein zweites Vergleichsmodul zum Vergleichen der Sensordaten eines Sensors eines zweiten Sensortyps mit dem Objektmodell;

- ein Integrationsmodul zum Bestimmen eines aktualisierten Objektmodells auf Basis der Vergleiche; und

- einen Ausgang zum Ausgeben des aktualisierten Objektmodells, wenn eine Korrelation zwischen den Sensordaten und dem aktualisierten Objektmodell hinreichend ist.

Bei der erfindungsgemäßen Lösung wird ein modellbasierter Ansatz für die Fusion von Sensordaten unterschiedlicher Sensortypen genutzt. Im Rahmen der Verarbeitung der Sensordaten wird die Korrelation zwischen einem Objektmodell und den jeweiligen Sensordaten ausgewertet. Als Ergebnis der Verarbeitung wird bei hinreichender Übereinstimmung das entsprechende Objektmodell ausgegeben. Wann die Korrelation zwischen den Sensordaten und dem aktualisierten Objektmodell hinreichend ist, d.h. wann das Objektmodell hinreichend gut ist, ist anwendungsabhängig. Bei der Erkennung von Verkehrszeichen ist das Objektmodell beispielsweise ausreichend gut, wenn die Korrelation des geschätzten Verkehrszeichens nur mit einem der in Frage kommenden Verkehrszeichen einen ausreichend hohen Wert erreicht. Bei der Fußgängererkennung ist das Objektmodell z.B. ausreichend gut, wenn die Korrelation des geschätzten Objekts nur mit einem Fußgänger einen ausreichend hohen Wert erreicht, nicht jedoch mit einem sonstigen Lebewesen. Die erfindungsgemäße Lösung stellt vergleichsweise geringe Anforderungen an die verfügbare Rechenleistung und läuft auf gängigen Mikrocontrollern, die derzeit durch hochautonome Fahrsysteme genutzt werden.

Gemäß einem Aspekt der Erfindung umfassen die Objektmodelle eine Position des Objekts relativ zum Kraftfahrzeug. Auf diese Weise kann berücksichtigt werden, dass das gleiche reale Objekt in Abhängigkeit von seiner Entfernung und relativen Lage zum Kraftfahrzeug unterschiedlich durch die Sensoren erfasst wird.

Gemäß einem Aspekt der Erfindung sind die Objektmodelle in einer Bibliothek von Objektmodellen abgelegt. In einer solchen Bibliothek kann eine Vielzahl von Objektmodellen vorgehalten werden. Eine Auswahl eines konkreten Objektmodells kann beispielsweise auf Basis einer Vorabanalyse der Sensordaten oder auf Grundlage von Daten weiterer Sensoren erfolgen.

Gemäß einem Aspekt der Erfindung sind die Sensordaten räumliche Sensordaten. Dies erlaubt es, auf einfache Weise eine Unterscheidung zwischen einem Objekt im Vordergrund und dem Hintergrund vorzunehmen, wodurch die Objekterkennung deutlich erleichtert wird.

Gemäß einem Aspekt der Erfindung werden vor dem Vergleichen der Sensordaten mit einem Objektmodell Sensormodelle auf das Objektmodell angewandt. Durch die Sensormodelle wird simuliert, wie das modellierte Objekt durch den konkreten Sensor erfasst werden würde, d.h. welche zugehörigen Sensordaten zu erwarten wären. Dies vereinfacht den Vergleich der Sensordaten mit dem Objektmodell.

Gemäß einem Aspekt der Erfindung werden für die Sensormodelle lineare Algorithmen verwendet. Dies hat den Vorteil, dass das Verfahren sehr robust und stabil ist. Zudem ergeben sich kurze Reaktionszeiten bei zugleich geringen Anforderungen an die verfügbare Rechenleistung. Natürlich können bei Bedarf auch auf künstlicher Intelligenz basierende Algorithmen verwendet werden.

Gemäß einem Aspekt der Erfindung werden beim Vergleichen der Sensordaten mit einem Objektmodell Differenzwerte als Maß für eine Übereinstimmung zwischen den Sensordaten und dem Objektmodell ermittelt. Die Bestimmung von Differenzwerten stellt eine Hochpassfilterung der Sensordaten dar. Die Differenzwerte korrelieren daher sehr genau mit dem Maß der Übereinstimmung, sodass sie sehr gut als Indikatoren für die Übereinstimmung geeignet sind.

Gemäß einem Aspekt der Erfindung ist der Sensor des ersten Sensortyps ein Radarsensor und der Sensor des zweiten Sensortyps eine Stereokamera. Bei diesen Sensoren handelt es sich um Sensortypen, die üblicherweise für die Umfelderfassung zum Zwecke von hochautonomen Fahrfunktionen verwendet werden. Natürlich können auch andere Sensortypen verwendet werden, z.B. Laserscanner, Lidarsensoren oder Ultraschallsensoren.

Vorzugsweise wird eine erfindungsgemäße Lösung in einem autonomen, teilautonomen oder mit Assistenzsystemen ausgestatteten Kraftfahrzeug genutzt, z.B. in einem Personenkraftfahrzeug oder einem Nutzfahrzeug. Insbesondere kann die Nutzung der erfindungsgemäßen Lösung dabei durch ein Assistenzsystem erfolgen, z.B. durch ein System für eine assistierte oder automatisierte Fahrfunktion.

Weitere Merkmale der vorliegenden Erfindung werden aus der nachfolgenden Beschreibung und den angehängten Ansprüchen in Verbindung mit den Figuren ersichtlich.

Figurenübersicht

Fig. 1    zeigt schematisch ein Verfahren zum Verarbeiten von Sensordaten in einem Kraftfahrzeug;

Fig. 2    zeigt schematisch eine erste Ausführungsform einer Vorrichtung zum Verarbeiten von Sensordaten in einem Kraftfahrzeug;

Fig. 3    zeigt schematisch eine zweite Ausführungsform einer Vorrichtung zum Verarbeiten von Sensordaten in einem Kraftfahrzeug; und

Fig. 4    zeigt schematisch einen detaillierten Ablauf einer Sensordatenverarbeitung gemäß der Erfindung;

Fig. 5    zeigt schematisch ein Kraftfahrzeug, in dem eine erfindungsgemäße Lösung realisiert ist.

Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

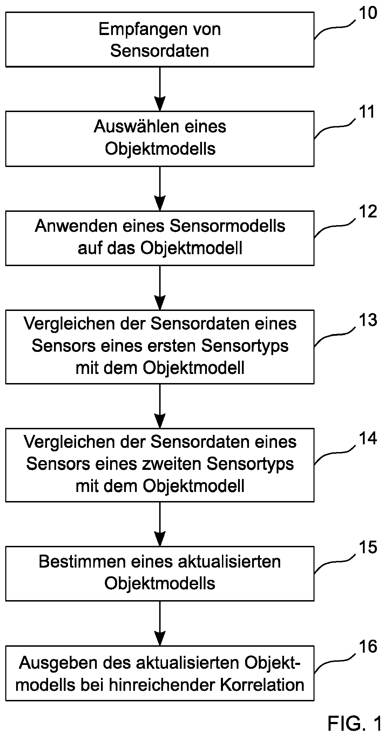

Fig. 1 zeigt schematisch ein Verfahren zum Verarbeiten von Sensordaten in einem Kraftfahrzeug, z.B. für eine assistierte oder automatisierte Fahrfunktion. In einem ersten Schritt werden Sensordaten bezüglich eines Objekts empfangen 10, die von Sensoren zumindest zweier Sensortypen stammen. Bei den Sensordaten kann es sich insbesondere um räumliche Sensordaten eines Radarsensors und einer Stereokamera handeln. Weiterhin wird ein Objektmodell ausgewählt 11, auf das Sensormodelle der jeweiligen Sensortypen angewandt werden 12. Dabei können insbesondere lineare Algorithmen verwendet werden. Vorzugsweise umfasst das Objektmodell eine Position des Objekts relativ zum Kraftfahrzeug. Die

Objektmodelle können beispielsweise in einer Bibliothek von Objektmodellen abgelegt sein. Anschließend werden die Sensordaten eines Sensors eines ersten Sensortyps mit dem Objektmodell verglichen 13. Ebenso werden die Sensordaten eines Sensors eines zweiten Sensortyps mit dem Objektmodell verglichen 14. Auf Basis der Vergleiche 13, 14 wird ein aktualisiertes Objektmodell bestimmt 15. Dieses wird schließlich ausgegeben 16, wenn eine Korrelation zwischen den Sensordaten und dem aktualisierten Objektmodell hinreichend ist.

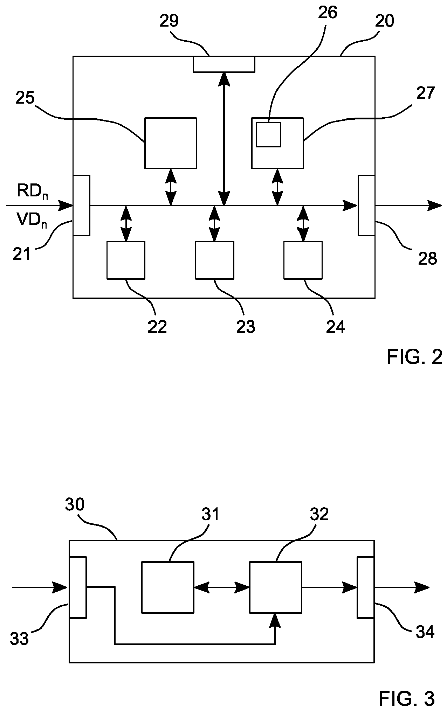

Fig. 2 zeigt eine vereinfachte schematische Darstellung einer ersten Ausführungsform einer Vorrichtung 20 zum Verarbeiten von Sensordaten $RD_n$, $VD_n$ in einem Kraftfahrzeug, z.B. für eine assistierte oder automatisierte Fahrfunktion. Die Vorrichtung 20 hat einen Eingang 21, über den Sensordaten $RD_n$, $VD_n$ bezüglich eines Objekts empfangen werden können, die von Sensoren zumindest zweier Sensortypen stammen. Bei den Sensordaten $RD_n$, $VD_n$ kann es sich insbesondere um räumliche Sensordaten $RD_n$, $VD_n$ eines Radarsensors und einer Stereokamera handeln. Ein erstes Vergleichsmodul 22 vergleicht die Sensordaten $RD_n$ eines Sensors eines ersten Sensortyps mit einem ausgewählten Objektmodell. Zudem vergleicht ein zweites Vergleichsmodul 23 die Sensordaten $VD_n$ eines Sensors eines zweiten Sensortyps mit dem ausgewählten Objektmodell. Vorzugsweise werden durch die Vergleichsmodule 22, 23 zunächst Sensormodelle der jeweiligen Sensortypen auf das Objektmodell angewandt. Dies kann alternativ auch durch eigenständige Verarbeitungsmodule erfolgen. Insbesondere können dabei lineare Algorithmen verwendet werden. Ein Integrationsmodul 24 bestimmt auf Basis der Vergleiche ein aktualisiertes Objektmodell. Wenn eine Korrelation zwischen den Sensordaten und dem aktualisierten Objektmodell hinreichend ist, wird das aktualisierte Objektmodell über einen Ausgang 28 der Vorrichtung 20 ausgegeben, z.B. zur Verwendung durch ein Assistenzsystem. Die Objektmodelle umfassen vorzugsweise eine Position des Objekts relativ zum Kraftfahrzeug.

Die Vergleichsmodule 22, 23 und das Integrationsmodul 24 können von einer Kontrolleinheit 25 gesteuert werden. Über eine Benutzerschnittstelle 29 können gegebenenfalls Einstellungen der Vergleichsmodule 22, 23, des Integrationsmoduls 24 oder der Kontrolleinheit 25 geändert werden. Die in der Vorrichtung 20 anfallenden Daten können bei Bedarf in einem Speicher 27 der Vorrichtung 20 abgelegt werden, beispielsweise für eine spätere Auswertung oder für eine Nutzung durch die Komponenten der Vorrichtung 20. In dem Speicher 27 kann zudem auch eine Bibliothek 26 von Objektmodellen abgelegt sein. Die Vergleichsmodule 22, 23, das Integrationsmodul 24 sowie die Kontrolleinheit 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 28 können als getrennte Schnittstellen oder als eine kombinierte bidirektionale Schnittstelle implementiert sein.

Fig. 3 zeigt eine vereinfachte schematische Darstellung einer zweiten Ausführungsform einer Vorrichtung 30 zum Verarbeiten von Sensordaten in einem Kraftfahrzeug. Die Vorrichtung 30 weist einen Prozessor 32 und einen Speicher 31 auf. Beispielsweise handelt es sich bei der Vorrichtung 30 um einen Computer, ein Steuergerät oder einen Mikrocontroller. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, insbesondere von Sensordaten von Sensoren des Kraftfahrzeugs. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 27, 31 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

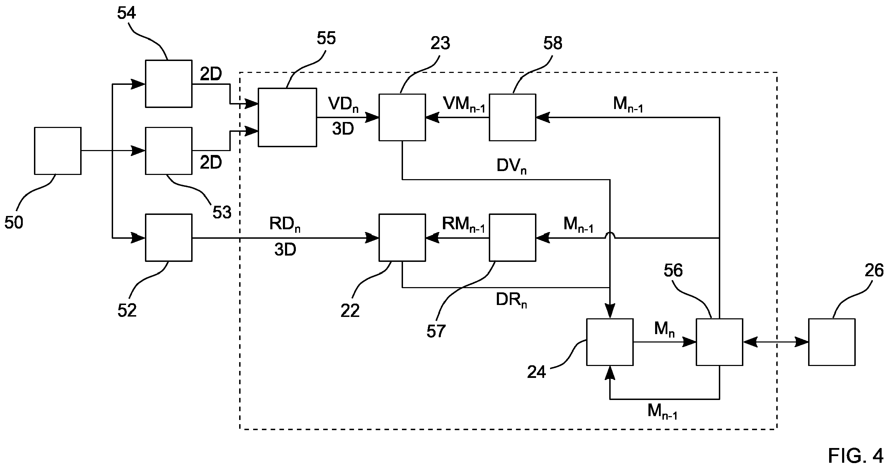

Fig. 4 zeigt schematisch einen detaillierten Ablauf einer Sensordatenverarbeitung gemäß der Erfindung. Der gestrichelte Kasten umfasst dabei alle Elemente, die eine Fusion von Sensordaten bewirken. Mittels Sensoren 52, 53, 54 zweier Sensortypen werden Sensordaten $RD_n$, $VD_n$ bezüglich eines Objekts 50 erfasst. Beispielhaft handelt es sich in Fig. 4 einerseits um 3D-Radardaten $RD_n$ eines Radarsensors 52, andererseits um 2D-Videodaten zweier Kameras 53, 54, aus denen ein Decoder 55 3D-Videodaten $VD_n$ bestimmt. Die beiden Kameras 53, 54 funktionieren zusammen mit dem Decoder 55 somit als Stereokamera. Selbstverständlich beschränkt sich die erfindungsgemäße Lösung nicht auf diese Sensortypen. Beispielsweise können auch Laserscanner, Lidarsensoren oder Ultraschallsensoren verwendet werden. Ein Objektmodul 56 wählt nun ein Objektmodell $M_{n-1}$ aus einer Bibliothek 26 von Objektmodellen $M_i$. Diese Auswahl kann beispielsweise auf Basis einer Vorabanalyse der Sensordaten $RD_n$, $VD_n$ oder auf Grundlage von Daten weiterer Sensoren erfolgen. Z.B. deutet das Vorhandensein geometrischer Formen in den Videodaten darauf hin, dass es sich um ein Verkehrszeichen handeln könnte. In diesem Fall würde ein Modell eines Verkehrszeichens ausgewählt werden. Die Auswertung eines Wärmebildes könnte Hinweise liefern, dass sich ein Lebewesen im Erfassungsbereich der Sensoren 52, 53, 54 befindet. In diesem Fall könnte ein Modell eines Menschen ausgewählt werden. Ein erstes Verarbeitungsmodul 57 wendet nun ein Radarmodell auf das ausgewählte Objektmodell $M_{n-1}$ an. Das Radarmodell nutzt vorzugsweise einen linearen Algorithmus. Das Ergebnis ist ein Radar-Objektmodell $RM_{n-1}$. Ein erstes Vergleichsmodul 22 bestimmt dann eine Korrelation zwischen den Sensordaten $RD_n$ und dem Radar-Objektmodell $RM_{n-1}$, d.h. es vergleicht die Sensordaten $RD_n$ mit der Ausgabe des ersten Verarbeitungsmoduls 57. Entsprechend wendet ein zweites Verarbeitungsmodul 58 ein Kameramodell auf das ausgewählte Objektmodell $M_{n-1}$ an. Auch das Kameramodell nutzt vorzugsweise einen linearen Algorithmus. Das Ergebnis ist ein Kamera-Objektmodell $VM_{n-1}$. Ein zweites Vergleichsmodul 23 bestimmt eine Korrelation zwischen den Sensordaten $VD_n$ und dem Kamera-Objektmodell $VM_{n-1}$, d.h. es vergleicht die Sensordaten $VD_n$ mit der Ausgabe des zweiten Verarbeitungsmoduls 58. Falls sich das reale Objekt 50 oder das Fahrzeug bewegt, handelt es sich beim Radarmodell und beim Kameramodell um Vorhersagemodelle. Die beiden Vergleichsmodule 22, 23 wirken wie ein Hochpassfilter für die Sensordaten. Die bei den Vergleichen bestimmten Differenzwerte $DR_n$, $DV_n$ sowie das Objektmodell $M_{n-1}$ werden durch ein Integrationsmodul 24 genutzt, um ein aktualisiertes Objektmodell $M_n$ zu bestimmen. Dazu kann das Integrationsmodul 24 beispielsweise die mit Gewichtungsfaktoren $w_1$, $w_2$ gewichteten Differenzwerte zum Objektmodell $M_{n-1}$ addieren:

$$M_n(x,y,z) = w_1 \cdot (RD_n(x,y,z) - RM_{n-1}(x,y,z)) + w_2 \cdot (VD_n(x,y,z) - VM_{n-1}(x,y,z)) + $$
$$+ (1 - w_1 - w_2) \cdot M_{n-1}(x,y,z)$$

Das aktualisierte Objektmodell $M_n$ wird an das Objektmodul 56 übergeben und bei hinreichender Korrelation mit den Sensordaten $RD_n$, $VD_n$ zur weiteren Verwendung ausgegeben. Die Differenzwerte $DR_n$, $DV_n$ sind in diesem Zusammenhang gute Indikatoren für die Übereinstimmung zwischen dem Objektmodell $M_n$ und dem realen Objekt 50.

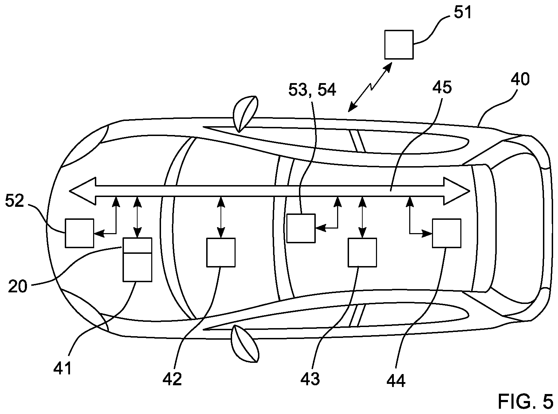

Fig. 5 zeigt schematisch ein Kraftfahrzeug 40, in dem eine erfindungsgemäße Lösung realisiert ist. Bei dem Kraftfahrzeug 40 handelt es sich beispielsweise um ein autonomes, ein teilautonomes oder ein mit Assistenzsystemen 41 ausgestattetes Kraftfahrzeug 40. Das Kraftfahrzeug 40 weist zumindest ein Assistenzsystem 41 sowie eine Vorrichtung 20 zum Verarbeiten von Sensordaten für das Assistenzsystem 41 auf. Die Vorrichtung 20 kann natürlich auch in das Assistenzsystem 41 integriert sein. Das Kraftfahrzeug 40 weist zudem eine Sensorik auf, mit der Sensordaten erfasst werden können. Die Sensorik kann insbesondere Sensoren zur Umfelderkennung umfassen, z.B. Ultraschallsensoren, Laserscanner, Radarsensoren, Lidarsensoren oder Kameras. In Fig. 5 umfasst die Sensorik beispielhaft einen Radarsensor 52 sowie zwei Kameras 53, 54 einer Stereokamera. Weitere Bestandteile des Kraftfahrzeugs 40 sind in diesem Beispiel ein Navigationssystem 42 sowie eine Datenübertragungseinheit 43. Mittels der Datenübertragungseinheit 43 kann eine Verbindung zu einem Backend 51 aufgebaut werden, z.B. zum Übermitteln von neuen oder aktualisierten Modellen.

Zur Speicherung von Daten ist ein Speicher 44 vorhanden. Der Datenaustausch zwischen den verschiedenen Komponenten des Kraftfahrzeugs 40 erfolgt über ein Netzwerk 45.

**Patentansprüche**

1.  Verfahren zum Verarbeiten von Sensordaten ($RD_n$, $VD_n$) in einem Kraftfahrzeug (40), mit den Schritten:

    - Empfangen (10) von Sensordaten ($RD_n$, $VD_n$) bezüglich eines Objekts (50) von Sensoren (52, 53, 54) zumindest zweier Sensortypen;
    - Vergleichen (13) der Sensordaten ($RD_n$) eines Sensors (52) eines ersten Sensortyps mit einem Objektmodell ($M_{n-1}$);
    - Vergleichen (14) der Sensordaten ($VD_n$) eines Sensors (53, 54) eines zweiten Sensortyps mit dem Objektmodell ($M_{n-1}$);
    - Bestimmen (15) eines aktualisierten Objektmodells ($M_n$) auf Basis der Vergleiche (13, 14); und
    - Ausgeben (16) des aktualisierten Objektmodells ($M_n$), wenn eine Korrelation zwischen den Sensordaten ($RD_n$, $VD_n$) und dem aktualisierten Objektmodell ($M_n$) hinreichend ist.

2.  Verfahren gemäß Anspruch 1, wobei die Objektmodelle ($M_i$) eine Position des Objekts (50) relativ zum Kraftfahrzeug (40) umfassen.

3.  Verfahren gemäß Anspruch 1 oder 2, wobei die Objektmodelle ($M_i$) in einer Bibliothek (26) von Objektmodellen ($M_i$) abgelegt sind.

4.  Verfahren gemäß einem der vorherigen Ansprüche, wobei die Sensordaten ($RD_n$, $VD_n$) räumliche Sensordaten sind.

5.  Verfahren gemäß einem der vorherigen Ansprüche, wobei vor dem Vergleichen (13, 14) der Sensordaten ($RD_n$, $VD_n$) mit einem Objektmodell ($M_i$) Sensormodelle auf das Objektmodell ($M_i$) angewandt werden (12).

6.  Verfahren gemäß Anspruch 5, wobei für die Sensormodelle lineare Algorithmen verwendet werden.

7.  Verfahren gemäß einem der vorherigen Ansprüche, wobei beim Vergleichen (13, 14) der Sensordaten ($RD_n$, $VD_n$) mit einem Objektmodell ($M_i$) Differenzwerte ($DR_n$, $DV_n$) als Maß für eine Übereinstimmung zwischen den Sensordaten ($RD_n$, $VD_n$) und dem Objektmodell ($M_i$) ermittelt werden.

8.  Verfahren gemäß einem der vorherigen Ansprüche, wobei der Sensor (52) des ersten Sensortyps ein Radarsensor ist und der Sensor (53, 54) des zweiten Sensortyps eine Stereokamera ist.

9.  Computerprogramm mit Instruktionen, die bei Ausführung durch einen Computer den Computer zur Ausführung der Schritte eines Verfahrens gemäß einem der Ansprüche 1 bis 8 zum Verarbeiten von Sensordaten ($RD_n$, $VD_n$) in einem Kraftfahrzeug (40) veranlassen.

10. Vorrichtung (20) zum Verarbeiten von Sensordaten ($RD_n$, $VD_n$) in einem Kraftfahrzeug (40), mit:

    - einem Eingang (21) zum Empfangen (10) von Sensordaten ($RD_n$, $VD_n$) bezüglich eines Objekts (50) von Sensoren (52, 53, 54) zumindest zweier Sensortypen;
    - einem ersten Vergleichsmodul (22) zum Vergleichen (13) der Sensordaten ($RD_n$) eines Sensors (52) eines ersten Sensortyps mit einem Objektmodell ($M_{n-1}$);
    - einem zweiten Vergleichsmodul (23) zum Vergleichen (14) der Sensordaten ($VD_n$) eines Sensors (53, 54) eines zweiten Sensortyps mit dem Objektmodell ($M_{n-1}$);
    - einem Integrationsmodul (24) zum Bestimmen (15) eines aktualisierten Objektmodells ($M_n$) auf Basis der Vergleiche (13, 14); und
    - einem Ausgang (28) zum Ausgeben (16) des aktualisierten Objektmodells ($M_n$), wenn eine Korrelation zwischen den Sensordaten ($RD_n$, $VD_n$) und dem aktualisierten Objektmodell ($M_n$) hinreichend ist.

11. Assistenzsystem (41) für ein Kraftfahrzeug (40), **dadurch gekennzeichnet, dass** das Assistenzsystem (41) eingerichtet ist, ein Verfahren gemäß einem der Ansprüche 1 bis 8 zum Verarbeiten von Sensordaten ($RD_n$, $VD_n$) auszuführen.

12. Autonomes oder teilautonomes Kraftfahrzeug (40) mit einem Assistenzsystem (41) gemäß Anspruch 11.

```
┌─────────────────────────┐
│     Empfangen von       │        10
│      Sensordaten        │
└─────────────────────────┘
             │
             ▼
┌─────────────────────────┐
│    Auswählen eines      │        11
│      Objektmodells      │
└─────────────────────────┘
             │
             ▼
┌─────────────────────────┐
│ Anwenden eines Sensormodells │   12
│    auf das Objektmodell │
└─────────────────────────┘
             │
             ▼
┌─────────────────────────┐
│ Vergleichen der Sensordaten eines │  13
│ Sensors eines ersten Sensortyps   │
│    mit dem Objektmodell │
└─────────────────────────┘
             │
             ▼
┌─────────────────────────┐
│ Vergleichen der Sensordaten eines │  14
│ Sensors eines zweiten Sensortyps  │
│    mit dem Objektmodell │
└─────────────────────────┘
             │
             ▼
┌─────────────────────────┐
│ Bestimmen eines aktualisierten │   15
│      Objektmodells      │
└─────────────────────────┘
             │
             ▼
┌─────────────────────────┐
│ Ausgeben des aktualisierten Objekt- │  16
│ modells bei hinreichender Korrelation │
└─────────────────────────┘
```

FIG. 1

FIG. 2

FIG. 3

FIG. 4

EP 3 809 311 A1

FIG. 5

Europäisches
Patentamt

European
Patent Office

Office européen
des brevets

## EUROPÄISCHER RECHERCHENBERICHT

Nummer der Anmeldung

EP 19 20 3374

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 199 62 997 A1 (BOSCH GMBH ROBERT [DE]) 28. Juni 2001 (2001-06-28) * Spalte 1, Zeile 62 - Zeile 67 * * Spalte 4, Zeile 7 - Spalte 5, Zeile 21 * * Spalte 4, Zeile 32 - Zeile 45 * * Spalte 5, Zeile 4 - Zeile 10 * * Spalte 6, Zeile 30 * * Spalte 6, Zeile 36 - Zeile 53 * * Abbildungen 1,2,3 * * Ansprüche 1,2 * ----- | 1-12 | INV. G06K9/00 G06K9/62 |
| A | US 2013/242284 A1 (ZENG SHUQING [US]) 19. September 2013 (2013-09-19) * Absatz [0003] * * Absatz [0010] * ----- | 1-4,8-12 | |

RECHERCHIERTE SACHGEBIETE (IPC)

G06K

Der vorliegende Recherchenbericht wurde für alle Patentansprüche erstellt

| Recherchenort | Abschlußdatum der Recherche | Prüfer |
|---|---|---|
| Den Haag | 3. April 2020 | Moreno, Marta |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 20 3374

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-04-2020

| Im Recherchenbericht angeführtes Patentdokument | Datum der Veröffentlichung | Mitglied(er) der Patentfamilie | Datum der Veröffentlichung |
|---|---|---|---|
| DE 19962997 A1 | 28-06-2001 | DE 19962997 A1<br>FR 2803031 A1<br>IT MI20002668 A1<br>JP 2001227982 A<br>US 2002072869 A1 | 28-06-2001<br>29-06-2001<br>12-06-2002<br>24-08-2001<br>13-06-2002 |
| US 2013242284 A1 | 19-09-2013 | CN 104035071 A<br>DE 102013113571 A1<br>US 2013242284 A1<br>US 2016018524 A1 | 10-09-2014<br>11-09-2014<br>19-09-2013<br>21-01-2016 |

EPO FORM P0461

Für nähere Einzelheiten zu diesem Anhang : siehe Amtsblatt des Europäischen Patentamts, Nr.12/82